# EUROPEAN PATENT SPECIFICATION

(11) **EP 1 060 061 B1**
(45) Date of publication and mention of the grant of the patent: **18.09.2002**
(21) Application number: 99907974.2
(22) Date of filing: 04.03.1999
(51) Int. Cl.: B27B 5/16

(54) **CARPENTER'S AND JOINER'S POWER SAW**
UNTERTISCHKREISSÄGE
SCIE DE MENUISIER

(30) Priority: 06.03.1998 NO 100011; 14.09.1998 NO 420051
(43) Date of publication of application: 20.12.2000
(73) Proprietor: Ernex AS, 1790 Tistedal (NO)
(72) Inventor: HANSEN, Jan, N-1796 Kornsj (NO)
(74) Representative: Popp, Eugen, Dr.
(86) International application number: NO9900075
(87) International publication number: WO99044795

(56) References cited:
- WO-A1-97/01421
- DE-A1- 2 813 825
- DE-A1- 3 816 125
- US-A- 5 230 269

## Description

The invention relates to a carpenter's and joiner's power saw with a stand, a frame which is arranged in the stand and can be raised and lowered relative to the stand, the frame carrying a saw blade, and a lifting device for raising and lowering the frame, where the lifting device comprises a lever mounted in the frame with an operating handle, which is located at one side of the stand, and an attachment device for securing the frame relative to the stand, and the attachment device comprises an operating body, a friction portion which is movable together with the frame, and a friction element which is mounted in the stand movable across the friction element's direction of movement, and which by means of the operating body can be brought into frictional engagement with the friction portion.

From the prior art there are known carpenter's and joiner's power saws of the type mentioned at the beginning, where the attachment device is arranged under a tabletop of the stand which is arranged to support a workpiece, and at a distance from the operating handle whereby the frame can be lifted. If the saw blade requires to be secured relative to the tabletop in a position which is located above a lower rest position, wherein the frame is fully lowered, the operator must first grip the operating handle with one hand and lift the frame to the desired height. While the operator secures the frame in this position with one arm, he then has to bend down while simultaneously stretching the other arm far into the stand under the tabletop to the point where the operating body is located and operate it in order to lock the frame relative to the stand. This may result in the operator's head being moved far from a position in which he can observe the saw blade's position relative to a workpiece which is placed on the tabletop, and this is inconvenient.

It is obvious that for an operator who is constantly using the saw for sawing various workpieces, frequent bending and stretching of this kind is strenuous and time-consuming. Moreover, due to the difficulty in surveying the whole operation, it may be necessary to loosen and tighten the attachment device and raise or lower the frame several times before the frame is situated in the desired position. Even though a carpenter's and joiner's power saw of this type has been known for many years, no proposal has yet been put forward by persons skilled in the art for a modification of the saw.

The object of the invention is to provide a device of the above-mentioned type which is not encumbered by the above-mentioned disadvantages.

This object is achieved with a carpenter's and joiner's power saw with the features which are indicated in the characteristic of the claim.

The invention will now be described in more detail with reference to the drawing which illustrates an embodiment of a carpenter's and joiner's power saw according to the invention.

Fig. 1 is a perspective view of a carpenter's and joiner's power saw according to the invention.

Fig. 2 is a view of a portion of the carpenter's and joiner's power saw which is illustrated in fig. 1, near an operating handle for raising the saw blade and viewed in the direction of the arrow A, where the view illustrates an attachment device for securing a lifting arm for raising and lowering the saw blade and portions of the power saw are cut away.

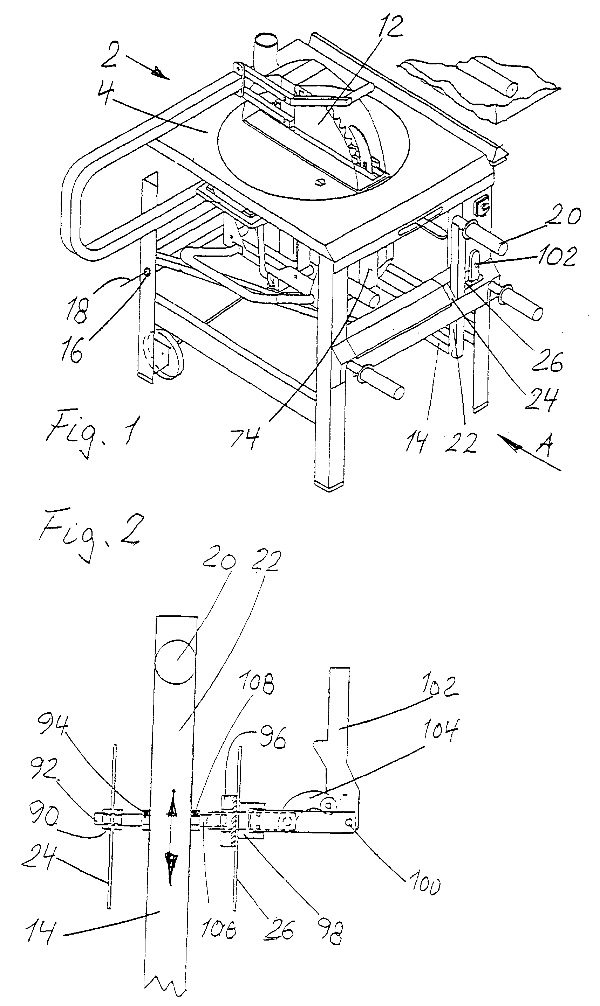

As illustrated in fig. 1 a carpenter's and joiner's power saw according to the invention comprises a stand 2 with a tabletop 4, and a saw blade 12. The saw blade is driven by an electric motor (not shown) which is mounted on a frame 74, which is arranged to be moved in the height direction along a path in the stand 2, and the saw blade is hereby arranged to extend along a corresponding path through a slot in the tabletop 4.

The raising and lowering of the frame and the saw blade are achieved by means of a lever device, comprising a Y-shaped lever 14 which is connected to the frame 74, and whose legs are mounted on pivots 16, which extend through respective legs of the stand. thus enabling the lever 14 to be pivoted about an axis 18. The lever has an operating handle 20 and a rod portion 22 which extends down therefrom and between adjacent, vertical portions 24. 26 of the stand 2.

In fig. 2 there is illustrated a device for securing the saw blade 12 in different positions wherein the saw blade 12 extends at different heights relative to the tabletop 4.

In the left-hand, vertical portion 24 of the stand 2, viewed in the direction of the arrow A, and at the rod portion 22, there is provided a hole wherein there is fastened a nut 90, whose longitudinal axis extends horizontally and towards the rod portion 22. In the nut 90 there is screwed a screw 92, which at the end facing the rod portion 22 carries a contact or friction head or element 94.

Similarly, in the right-hand, vertical portion 26 of the stand 2 there is provided a hole, through which there extends a bearing unit 96 which is attached to this portion 26. The portion 26 has a through-going hole, whose longitudinal axis is coaxial with the longitudinal axis of the nut 90. An extension 98 of the bearing unit 96 extends towards the right of the figure. At the right-hand end of the extension there is provided a shaft journal 100 which is linked to a rotatable handle or operating body 102. One end of a joint piece 104 is linked to the handle 102, and the other end of the joint piece 104 is linked to the right-hand end of a sliding piston 106, which extends through the hole in the bearing unit 96. The end of the sliding piston 106 which faces the rod portion 22 has a contact or friction head or element 108.

Thus by moving the handle 102 clockwise in fig. 5, the sliding piston 106 can be moved away from the rod portion 22. By moving the handle 102 in the other direction, the piston 106 can be moved towards the rod portion 22 until the friction head 108 comes into contact with the right-hand side of the rod portion 22. The left-hand side of the rod portion 22 can then be supported by the friction head 94 of the screw 92 and the rod portion 22 can be secured between the friction heads 94, 108, thus preventing it from being moved in the height direction. The rod portion 22 thereby represents a friction portion which co-operates with the friction heads or elements.

Adjustment of the frame 74 and thereby the saw blade relative to the tabletop 4 is very simple. If the saw blade is located in its lower rest position, wherein it does not project over the tabletop 4 and the attachment devices do not secure the frame, an operator can first grip the operating handle 20 and move it upwards. The saw blade is thereby also moved up through the slot in the tabletop 4. When the operator sees that the saw blade is at the correct height, he grips the operating body 102 and rotates it in such a manner that the frame is locked at this height. Since the operating handle 20 and the operating body 102 are located close to each other on the same side of the stand 2, it is very easy for the operator to observe the saw blade's position and lock the frame at the correct height without having to bend and twist his body unnecessarily.

## Claims

1. A carpenter's and joiner's power saw with
- a stand (2),
- a frame (74) which is arranged in the stand (2), and can be raised and lowered relative to the stand, the frame carrying a saw blade (12), and
- a lifting device (14, 20) for raising and lowering the frame (74),
- where the lifting device (14, 20) comprises a lever (14) mounted in the frame with an operating handle (20), which is located at one side of the stand (2), and an attachment device (104, 106) for securing the frame (74) relative to the stand (2),
- and the attachment device (104, 106) comprises an operating body (102). a friction portion (22), which is movable together with the frame, and a friction element (108), which is mounted in the stand (2) movable across the friction portion's (22) direction of movement, and which by means of the operating body (102) can be brought into frictional engagement with the friction portion (22),
**characterized in that** the friction portion (22) is a portion of the lever (14) and the operating body (102) is arranged on the same side of the stand as the operating handle (20).

## Patentansprüche

1. Elektrische Zimmerer- oder Schreinersäge mit
- einem Gestell (2),
- einem Rahmen (74), der in dem Gestell (2) angeordnet ist und bezüglich des Gestells gehoben und gesenkt werden kann, wobei der Rahmen ein Sägeblatt (12) trägt, und
- eine Hubeinrichtung (14, 20) zum Heben und Senken des Rahmens (74),
- wobei die Hubeinrichtung (14, 20) einen Hebel (14) umfasst, der in dem Rahmen mit einem Bediengriff (20) angebracht ist, der an einer Seite des Gestells (2) angeordnet ist, und eine Befestigungseinrichtung (104, 106), um den Rahmen bezüglich des Gestells (2) zu befestigen,
- und die Befestigungseinrichtung (104, 106) einen Funktionskörper (102), einen Friktionsabschnitt (22), der zusammen mit dem Rahmen beweglich ist, und ein Friktionselement (108) umfasst, das in dem Gestell (2) quer zur Bewegungsrichtung des Friktionsabschnitts (22) beweglich ist, und das mittels des Funktionskörpers (102) in Friktionsangriff am Friktionsabschnitt (22) gebracht werden kann,
**dadurch gekennzeichnet, dass** der Friktionsabschnitt (22) ein Abschnitt des Hebels (14) ist, und der Funktionskörper (102) auf derselben Seite des Gestells wie der Bediengriff (20) angeordnet ist.

## Revendications

1. Scie mécanique de charpentier ou de menuisier comportant :
- un montant (2),
- un châssis (74) qui est agencé dans le montant (2), et peut être levé ou abaissé par rapport au montant, le châssis portant une lame de scie (12), et
- un dispositif de levage (14, 20) pour lever et abaisser le châssis (74),
- où le dispositif de levage (14, 20) comprend un levier (14) monté sur le châssis comportant une poignée fonctionnelle (20) qui est située sur un côté du montant (2), et un dispositif de fixation (104, 106) pour fixer le châssis (74) par rapport au montant (2),
- et le dispositif de fixation (104, 106) comprend un corps fonctionnel (102), une partie de friction (22), pouvant se déplacer avec le châssis, et un élément de friction (108), qui est monté sur le montant (2) pouvant se déplacer dans la direction du mouvement de la partie de friction (22), et qui, au moyen du corps fonctionnel (102), peut être mis en prise par friction sur la partie de friction (22),
**caractérisée en ceci que** la partie de friction (22) est une partie du levier (14) et le corps fonctionnel (102) est disposé sur le même côté du montant que la poignée fonctionnelle (20).
